Europäisches Patentamt

European Patent Office

Office européen des brevets

(11) Veröffentlichungsnummer: **0 491 974 A1**

# (12) EUROPÄISCHE PATENTANMELDUNG

(21) Anmeldenummer: **90125236.1**

(22) Anmeldetag: **21.12.90**

(51) Int. Cl.⁵: **G05D 16/06**

(43) Veröffentlichungstag der Anmeldung:
**01.07.92 Patentblatt 92/27**

(84) Benannte Vertragsstaaten:
**AT BE CH DE DK ES FR GB GR IT LI LU NL SE**

(71) Anmelder: **DruVa-Armaturen GmbH**
**Wernher-von-Braun-Strasse 5-9**
**W-6904 Eppelheim(DE)**

(72) Erfinder: **Bauer, Horst**
**Vodergasse 7**
**W-6945 Hirschberg(DE)**

Erfinder: **Gafert, Peter**
**Goethestrasse 3**
**W-6902 Sandhausen(DE)**
Erfinder: **Seeger, Werner**
**Beethovenstrasse 7**
**W-6904 Eppelheim(DE)**

(74) Vertreter: **Kehl, Günther, Dipl.-Phys. et al**
**Patentanwälte Hagemann & Kehl Ismaninger**
**Strasse 108 Postfach 86 03 29**
**W-8000 München 86(DE)**

(54) **Druckminderer für Gase höchster Reinheit.**

(57) 1. Druckminderer für Gase höchster Reinheit mit einem einen Hochdruckeinlaß und einen Niederdruckauslaß aufweisenden Gehäusegrundkörper (1), in dem ein Ventil, bestehend aus einem Ventilsitz (2) und einem in Richtung auf den Ventilsitz vorgespannten Regelschieber (3) angeordnet ist, welches Ventil den Innenraum des Gehäusegrundkörpers in einen Niederdruckraum und einen Hochdruckraum unterteilt, und mit einer im Niederdruckraum angeordneten Membran (4), an der sich der Regelschieber (3) abstützt und die von ihrer dem Regelschieber (3) abgewandten Seite her mit einer einstellbaren Kraft belastbar ist.

Um einen Druckminderer zu schaffen, der gewährleistet, daß in dem den Druckminderer verlassenden Gasstrom möglichst keine Fremdpartikel enthalten sind, ist vorgesehen,daß der Regelschieber (3) einen ersten Permanentmagneten (5) enthält, der gegenüber einem mit dem Gehäusegrundkörper (1) verbundenen zweiten Permanentmagneten (6) angeordnet ist, wobei die Polarität der beiden Permanentmagnete (5, 6) so gewählt ist, daß der Regelschieber (3) durch die Magnetkraft der beiden Permanentmagnete (5, 6) in Richtung auf den Ventilsitz (2) vorgespannt ist.

Fig. 1

Die Erfindung bezieht sich auf einen Druckminderer für Gase höchster Reinheit mit einem einen Hochdruckeinlaß und einen Niederdruckauslaß aufweisenden Gehäusegrundkörper, in dem ein Ventil, bestehend aus einem Ventilsitz und einem in Richtung auf den Ventilsitz vorgespannten Regelschieber, angeordnet ist, welches Ventil den Innenraum des Gehäusegrundkörpers in einen Niederdruckraum und einen Hochdruckraum unterteilt, und mit einer im Niederdruckraum angeordneten Membran, an der sich der Regelschieber abstützt, und die von ihrer dem Regelschieber abgewandten Seite her mit einer einstellbaren Kraft belastbar ist.

Wenn ein Druckminderer der eingangs genannten Art für Dotiergase von höchster Reinheit verwendet wird, wie sie beispielsweise in der Mikroelektronik zur Herstellung von Halbleiterbauelementen gebraucht werden, stellen sich erhebliche Nachteile und Störungen ein. So wurden beispielsweise immer wieder trotz sorgfältigster Vorkehrungen kleinste Partikel von Staub und Kondensat in dem den Druckminderer verlassenden Gasstrom festgestellt. Derartige Störpartikel sind bei der hohen Präzision, die heutzutage bei der Herstellung von elektronischen Halbleiterbauelementen gefordert wird, nicht tolerierbar, da diese Partikel bei der heute üblichen dichten Flächenbelegung von Halbleiterelementen bereits zu erheblichen Störungen des Bauelements, d.h. zur Produktion von Ausschuß führen können.

Der Erfindung liegt daher die Aufgabe zugrunde, einen Druckminderer der eingangs genannten Art zu schaffen, der die Verarbeitung von Reinstgasen ermöglicht und gewährleistet, daß in dem den Gehäusegrundkörper verlassenden Gasstrom möglichst keine Fremdpartikel, insbesondere keine Wassertröpfen, Aerosole oder Staubpartikel enthalten sind. Der Druckminderer gemäß der Erfindung soll darüber hinaus eine präzise Regelung des Ausgangsdruckes ermöglichen.

Diese Aufgabe ist erfindungsgemäß dadurch gelöst, daß der Regelschieber einen ersten Permanentmagneten enthält, der gegenüber einem mit dem Gehäusegrundkörper verbundenen zweiten Permanentmagneten angeordnet ist, wobei die Polarität der beiden Permanentmagnete so gewählt ist, daß der Regelschieber durch die Magnetkraft der beiden Permanentmagnete in Richtung auf den Ventilsitz vorgespannt ist.

Durch die erfindungsgemäße Lösung ist es gelungen, den Innenraum des Druckminderers, mit dem die Reinstgase in Berührung kommen, möglichst frei von Spalten und Ritzen zu halten, die sich immer dort bilden, wo Bauteile, wie etwa Schließfedern oder dergleichen im Innenraum des Druckminderers angeordnet werden. An solchen Spalten oder Ritzen bauen sich im Laufe des Betriebs Partikel auf, die sich nach einiger Zeit abreißen und in den Gasstrom gelangen. Erstaunlicherweise hat sich gezeigt, daß mit der Lösung gemäß der Erfindung eine präzise Regelung des Ausgangsdrucks möglich ist, obwohl bei der Verwendung von Magneten zur Erzeugung von Rückstellkräften ein anderes Weg-Kraft-Gesetz gilt, als bei aus Druckfedern bestehenden Rückstellmitteln.

Nach einer vorteilhaften Ausgestaltung der Erfindung ist der erste Permanentmagnet in dem Regelschieber an seiner dem Ventilsitz abgewandten Seite angeordnet. Bei einer solchen Ausgestaltung wirkt das Magnetpaar gewissermaßen als Druckfeder und es hat sich gezeigt, daß sich dabei ein ausgezeichnetes Regelverhalten einstellt.

Nach einer weiteren Weiterbildung der Erfindung ist vorgesehen, daß der erste Permanentmagnet in dem Regelschieber gekapselt ist. Der üblicherweise aus Sintermetall bestehende Permanentmagnet ist daher vollständig und dicht in den Regelschieber integriert und kommt nicht mit den korrosiven Gasen in Berührung. Dies gilt insbesondere dann, wenn nach einer weiteren Ausführungsform der Regelschieber eine Ausnehmung aufweist, die den ersten Permanentmagneten aufnimmt, wobei die Ausnehmung durch eine Edelstahlmembran dicht abgeschlossen ist.

Vorteilhaft ist des weiteren, wenn auch der zweite Permanentmagnet gekapselt ist.

In vorteilhafter Weiterbildung der Erfindung ist des weiteren vorgesehen, daß der Regelschieber an seiner zur Anlage an den Ventilsitz bestimmten Seite einen eingebördelten Kunststoffring aufweist. Durch den Kunststoffring ist ein vollkommen dichter Sitz des Regelschiebers auf dem Ventilsitz gewährleistet, insbesondere dann, wenn der Ventilsitz aus einer Bohrung im Gehäusegrundkörper besteht, gegen deren Rand der Kunststoffring anstellbar ist. Dadurch, daß der Ventilsitz aus einer Bohrung im Gehäusegrundkörper besteht und folglich keine zusätzlichen Teile aufweist, ist die spalt- und ritzenfreie Ausführung des Druckminderers sichergestellt.

Ein besonders gutes Dichtverhalten des Regelschiebers wird erzielt, wenn der Ventilsitz mit einem umlaufenden Dichtwulst versehen wird, gegen den der Kunststoffring des Regelschiebers anstellbar ist.

Nach einer besonders vorteilhaften Weiterbildung der Erfindung ist vorgesehen, daß der die Membran enthaltende Niederdruckraum die Form eines flachen Zylinders oder Prismas aufweist, und auf einer Seite durch eine durchgehend ebene Fläche des Gehäusegrundkörpers und auf der gegenüberliegenden Seite durch die in eine Vertiefung eines Gehäusedeckels eingelassene Membran begrenzt wird, wobei sich der Gehäusedeckel randseitig auf der ebenen Fläche des Gehäusegrundkörpers abstützt. Der Niederdruckraum wird somit einerseits durch die Abschlußfläche des Gehäusegrundkörpers gebildet, die im Gegensatz zu Druckminderern nach dem Stand der Technik vollkommen eben ist. In diese den Niederdruckraum begrenzende Fläche münden lediglich in der Mitte die Ventilöffnung sowie die zum Auslaßstutzen führende Niederdruckleitung. Bei dieser Bauweise kann die eine Wand des die Membran enthaltenden Niederdruckraums vollkommen flach ausgeführt werden und eignet sich daher besonders für Oberflächenbehandlungsverfahren, bei denen Kombinationen von elektrischem und mechanischem Polieren verwendet werden.

Vorteilhafterweise wird die Membran randseitig gegen den Gehäusegrundkörper durch einen C-Ring abgedichtet. Die Kraft, mit der der C-Ring belastet wird, ist durch die Tiefe der die Membran enthaltenden Vertiefung des Gehäusedeckels bestimmt. Eine Überlastung der C-Ringdichtung ist folglich nicht möglich. Der die Membran enthaltende Niederdruckraum wird somit einerseits durch die Niederdruckmembran, andererseits die hochfeinpolierte Grenzfläche des Gehäusegrundkörpers und randseitig durch den C-Ring begrenzt. Alle diese Teile sind hinsichtlich ihrer Oberflächenqualität sehr gut beherrschbar und können daher leicht frei von Spalten und Ritzen gehalten werden, die als Kondensationspunkt für Aerosole und dergleichen wirken könnten.

Nach einer weiteren Ausführungsform der Erfindung wird der Gehäusedeckel auf dem Gehäusegrundkörper mittels eines Überwurfflanschringes befestigt, welcher Überwurfflanschring axiale Aufnahmen für Spannschrauben enthält, die sich an einer umlaufenden Schulter des Gehäusedeckels abstützen. Durch die Spannschrauben ist ein präzises gleichseitiges Anziehen und Befestigen des Gehäusedeckels möglich. Andererseits kann dieser leicht nach Lockern der Spannschrauben und nach Abdrehen des Überwurfflanschringes entfernt und ausgetauscht werden.

Im Gehäusedeckel ist ein Stellorgan angeordnet, mit dem auf die Membran eine einstellbare Kraft ausübbar ist. Dieses Stellorgan ist nach einer weiteren Ausgestaltung der Erfindung durch eine in dem Gehäusedeckel axial verschieblich geführte Dose abgeschlossen. Wenn diese Dose nach einer weiteren Ausführungsform Ausklinkungen aufweist, die sich in der der Membran naheliegenden Endstellung der Dose an dem Gehäusedeckel abstützen können, ist sichergestellt, daß bei eingestellter Federkraft und nicht stattfindendem Gasfluß der im Gleichgewicht arbeitende Auslösestift nicht zerstört wird..

Bei dem Stellorgan kann es sich um eine Druckfeder handeln, die sich einerseits an dem Innenboden der Dose und andererseits an einem axial verstellbaren Federsitz abstützt. Als Stellorgan wird jedoch nach einer besonders vorteilhaften Ausführungsform ein Pneumatikzylinder verwendet, dessen Kolbenstange sich am Boden der Dose abstützt. Durch die Verwendung des Pneumatikzylinders kann eine präzise Belastung der Membran und somit eine besonders präzise Drucksteuerung, wie sie in Reinstgasanlagen für die Mikroelektronik verlangt wird, erzielt werden. Auch ist die Ansteuerung des Druckminderers von einem entfernt gelegenen Stellpult möglich. Wie weiter unten noch näher erläutert wird, kann ein auf diese Weise ausgebildeter Druckminderer auch mit einem Regelkreis zur Regelung des Ausgangsdruckes kombiniert werden.

Nach einer weiteren vorteilhaften Ausführungsform der Erfindung enthält der Pneumatikzylinder mindestens zwei Arbeitsmembranen oder Arbeitskolben, die parallel mit Arbeitsfluid beaufschlagt werden. Dies ermöglicht eine kompakte Bauweise, d.h. eine Bauweise, bei der die Membranflächen und somit der Durchmesser des Kolbens des Pneumatikzylinders vergleichsweise klein gehalten werden können.

Nach einer besonders vorteilhaften Ausgestaltung der Erfindung ist der Gehäusegrundkörper einstückig mit den Anschlußstutzen verbunden, d.h. zwischen dem Anschlußstutzen und dem Gehäusegrundkörper besteht weder eine Schraubnoch eine Schweißverbindung. Auf diese Weise kann der Gehäusegrundkörper frei von Schweißnähten und Ritzen gehalten werden.

Nach einer weiteren vorteilhaften Ausführungsform ist vorgesehen, daß mindestens ein Anschlußstutzen eine Überwurfmutter trägt, mit deren Hilfe der Gehäusegrundkörper direkt mit einem Rohrleitungssystem oder mit einem anderen Aggregat verbunden wird. Der Anschlußstutzen wird dabei stumpf mit großer Kraft gegen den Anschlußstutzen des Rohrleitungssystems oder des anderen Aggregats gepreßt, so daß eine spaltfreie - wenn auch nicht einstückige - Verbindung hergestellt wird. Nach einer besonders erfinderischen Ausgestaltung des Druckminderers ist vorgesehen, daß der die Überwurfmutter tragende Anschlußstutzen eine Anschlagschulter aufweist, deren Durchmesser kleiner ist als die kleinste lichte Weite der Überwurfmutter, und daß die Überwurfmutter innenseitig einen mit Kugeln befüllbaren im Querschnitt etwa halbkreisförmigen Ringkanal aufweist, derart, daß die in den Ringkanal eingefüllten Kugeln an der Anschlagschulter anschlagen und die Überwurfmutter axial festlegen. Diese Ausgestaltung der Überwurfmutter macht es möglich, daß diese vom freien Ende des Anschlußstutzens her auf diesen aufgesetzt werden kann. Das sonst übliche Anschweißen des Anschlußstutzens nach dem Aufsetzen der Überwurfmutter entfällt daher. Durch das Einfüllen der Kugeln (nach dem Aufsetzen der Überwurfmutter) wird die Überwurtmutter auf dem Anschlußstutzen axial festgelegt, wobei eine geringe axiale Verschiebbarkeit innerhalb vorgegebener Grenzen möglich ist. Beim Festziehen der Überwurfmutter legen sich jedoch die in dem Ringkanal geführten Kugeln an die Anschlagschulter an, so daß die Überwurfmutter in Axialrichtung festgelegt ist. Die Kugeln wirken gleichzeitig als Kugellager, so daß auch bei großen Axialkräften eine Drehung der Überwurfmutter beim Festziehen mit vergleichsweise geringer Reibung möglich ist, so daß auf die zu verbindenden Teile kein nennenswertes Drehmoment ausgeübt wird.

Vorteilhafterweise ist die Überwurfmutter mit einem Radialkanal versehen, der in den Ringkanal mündet und der mit einem Schutzring nach Einfüllen der Kugeln verschließbar ist.

Eine begrenzte Verschiebbarkeit der Überwurfmutter in Axialrichtung hat sich als vorteilhaft erwiesen. Zu diesem Zweck ist der die Überwurfmutter tragende Anschlußstutzen zwischen der Anschlagschulter und dem Gehäusegrundkörper mit einer sich in Axialrichtung erstreckenden Ausnehmung versehen, über die die in dem Ringkanal geführten Kugeln gleiten können, bis sie an der Anschlagschulter anschlagen.

Eine weitere vorteilhafte Ausführungsform sieht vor, daß in dem Gehäusegrundkörper mindestens ein Kanal vorgesehen ist, der in den Niederdruckraum und/oder in den Hochdruckraum mündet, und daß in dem Kanal, bzw. in den Kanälen elektrische Drucksensoren angeordnet sind. Durch diese neue Bauweise ist es möglich, die Drucksensoren in den Gehäusegrundkörper zu integrieren, während nach dem Stand der Technik Druckmeßgeräte außerhalb des Druckminderers angeordnet und über Leitungen mit diesem verbunden waren. Durch die erfindungsgemäße Bauweise ist das Totvolumen und somit auch die Anzahl von Ritzen und Kanten verkleinert, die als Keimpunkte für Wassertröpfchen oder dergleichen dienen könnten. Nach dem Gedanken der Erfindung werden vielmehr die Drucksensoren möglichst nahe an die das Gas führenden Innenräume des Druckminderers herangebracht.

Nach einer besonders vorteilhaften Ausführungsform der Erfindung ist vorgesehen, daß der elektrische Ausgang des Drucksensors in dem Niederdruckraum mit einer Magnetventileinrichtung verbunden ist, deren Fluideingang mit Druckluft beaufschlagt ist und deren Fluidausgang mit dem Eingang des Pneumatikzylinders in Verbindung steht. Bei entsprechender Einstellung der Magnetventileinrichtung kann erreicht werden, daß der Arbeitsdruck im Pneumatikzylinder stets dann erhöht wird, wenn der Druck im Niederdruckraum unter einen vorgegebenen Sollwert abfällt. Durch die Höhe des Drucks im Pneumatikzylinder wird der Regelschieber in Öffnungsrichtung belastet, so daß Hochdruckgas über den Ventilsitz in den Niederdruckraum strömen kann, um dort den Druck zu erhöhen.

Gemäß einer vorteilhaften Ausgestaltung der Erfindung ist die Magnetventileinrichtung mit einem Vergleicher ausgerüstet, dessen Vergleichseingängen einerseits ein Sollwertsignal und andererseits das Ausgangssignal des Drucksensors zugeführt wird. Auf diese Weise kann erreicht werden, daß der Ausgangsdruck (auch Niederdruck oder Hinterdruck genannt) präzise auf einem vorgegebenen Sollwert gehalten werden kann. Insbesondere wird bei einem so geschalteten Druckminderer vermieden, daß - wie sonst üblich - der Ausgangsdruck bei abnehmendem Eingangsdruck (auch Vordruck genannt) ansteigt. Durch die erfindungsgemäß erzielte vollkommen exakte Regelung des Ausgangsdrucks können bei konstant gehaltener Drosselung auch die Strömungsmengen pro Zeiteinheit exakt konstant gehalten werden, was in dem eingangs geschliderten Anwendungsbereich von großer Wichtigkeit ist.

Die Erfindung wird im folgenden anhand der in den Figuren schematisch dargestellten Ausführungsbeispiele näher erläutert. Es zeigen:

Figur 1: einen Druckminderer gemäß der Erfindung im Längsschnitt,

Figur 2: ein Detail des Druckminderers aus Figur 1,

Figur 3: eine weitere Ausführungsform eines Druckminderers gemäß der Erfindung im Längsschnitt,

Figur 4: eine schematische Darstellung zur Erläuterung der Verbindung des Druckminderers mit einer Magnetventileinrichtung.

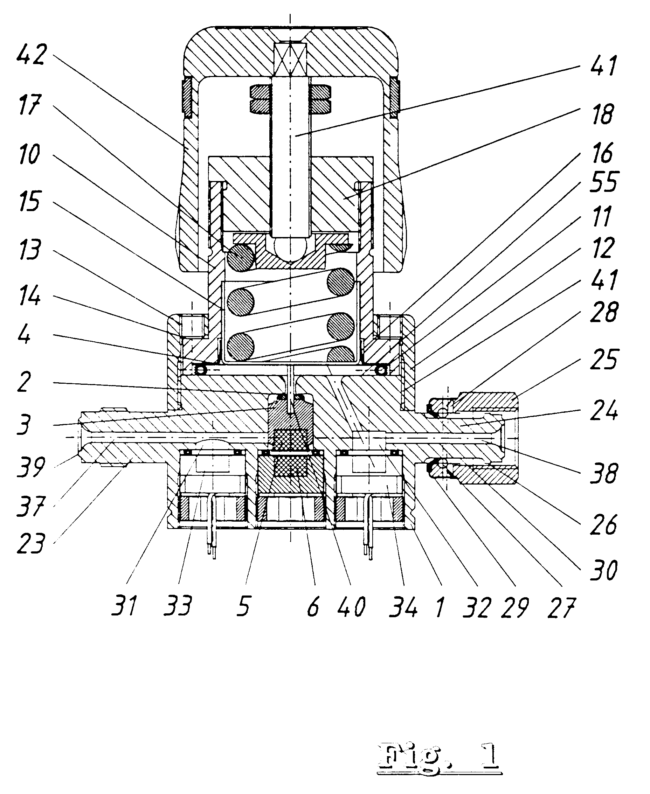

Der in Figur 1 dargestellte Druckminderer weist einen Gehäusegrundkörper 1 auf, der einschließlich der Anschlußstutzen 23 und 24 einstückig aus Edelstahl gefertigt ist. Der Gehäusegrundkörper enthält eine zentrale Längsbohrung, in der ein Regelschieber 3 sitzt. In die den Regelschieber 3 enthaltende Bohrung mündet eine radiale Bohrung 37, die sich durch den Anschlußstutzen 23 geradlinig bis zu der den Regelschieber 3 enthaltenden Bohrung erstreckt. Eine zweite Radialbohrung 38 führt durch den Anschlußstutzen 24 in das Innere des Gehäusegrundkörpers 1 und vor dem Erreichen der den Regelschieber 3 enthaltenden Bohrung schräg in die Richtung, in der sich der weiter unten zu beschreibende Gehäusedeckel befindet. Die den Regelschieber 3 enthaltende Bohrung weist eine Schulter auf, die als Ventilsitz 2 für den Regelschieber 3 ausgebildet ist. Der Gehäusegrundkörper 1 ist an seiner dem Gehäusedeckel zugewandten Abschlußfläche 55 vollkommen flach ausgebildet, so daß er dort für eine Oberflächenbearbeitung sehr gut zugänglich ist. Der Gehäusegrundkörper 1 enthält zwei weitere achsparallele Bohrungen, die in die Bohrungen 37 und 38 münden und die jeweils piezoelektrische Drucksensoren 33 und 34 enthalten, die sich an einer Schulter der Bohrung abstützen und mittels einer Innensechskantschraube dort befestigt sind.

Wie oben erwähnt, ist der Gehäusegrundkörper 1 einstückig mit den Anschlußstutzen 23 und 24 gefertigt. Der als Eingangsanschluß dienende Anschlußstutzen 23 trägt ein Außengewinde, das eine Überwurfmutter eines anderen Teils aufnehmen kann, das Bestandteil beispielsweise eines Leitungssystems oder eines anderen Aggregats ist. Das stirnseitige Ende des Anschlußstutzens 23 trägt einen Dichtwulst 39, der sich bei der Verbindung mit einer Anschlußleitung flachpreßt und eine dichte, praktisch spaltfreie Verbindung gewährleistet. Der als Ausgangsanschluß dienende Anschlußstutzen 24 trägt eine frei drehbare und in gewissen Grenzen axial bewegliche Überwurfmutter 25. Der Anschlußstutzen 24, der ebenso wie der Anschlußstutzen 23 einstückig mit dem Gehäusegrundkörper 1 gefertigt ist, weist über den Großteil seiner Länge eine umlaufende Ausnehmung 30 auf, die zu seinem freien Ende hin in eine Anschlagschulter 26 übergeht. Die Überwurfmutter 25 weist an ihrem dem Druckminderer zugewandten Ende eine innenliegende, im Querschnitt etwa halbkreisförmige Ringnut auf, in der zahlreiche Kugeln 27 angeordnet sind. Die Kugeln 27 werden zwischen der halbkreisförmigen Ringnut einerseits und der Wand der Ausnehmung 30 andererseits in ihrer Position gehalten. Eine Radialbohrung 28 in der Überwurfmutter 25, die in die halbkreisförmige Ringnut mündet und über die die Kugeln 27 in die Ringnut gebracht werden können, ist durch einen Schutzring 29 verschlossen. Bei der axialen Verschiebung der Überwurfmutter 25 gleiten oder rollen die Kugeln 27 über die Wandung der Ausnehmung 30, sie schlagen jedoch an der Anschlagschulter 26 an und bilden dort ein Kraftaufnahmelager, wenn die Überwurfmutter 25 auf einem Gegenstück festgezogen wird.

In der zentralen Axialbohrung des Gehäusegrundkörpers 1 sitzt, wie bereits erwähnt, der Regelschieber 3, der im Querschnitt sechseckig ist und dessen Stirnseite sich dichtend gegen den Ventilsitz 2 im Gehäusegrundkörper anlegen kann. Ein mit dem Regelschieber 3 verbundener Betätigungsstößel 40, dessen Durchmesser wesentlich kleiner als die lichte Weite der Bohrung des Ventilsitzes 2 ist, ragt durch die Ventilsitzbohrung hindurch. An der dem Betätigungsstößel 40 gegenüberliegenden Seite des Ventilschiebers 3 ist in eine Ausnehmung ein Permanentmagnet 5 eingelassen. Gegenüber diesem Permanentmagnet 5 ist ein weiterer Permanentmagnet 6 in dem Gehäusegrundkörper angeordnet. Die Bauweise wird im Detail weiter unten beschrieben. Die Magnete sind so angeordnet, daß sich eine abstoßende Wirkung ergibt und der Regelschieber 3 durch die Magnetkraft in Richtung auf den Ventilsitz 2 gedrückt wird.

Zur Befestigung eines Gehäusedeckels 10 auf dem Gehäusegrundkörper 1 ist der Gehäusegrundkörper mit einem Außengewinde 41 versehen, das einen Überwurfflanschring 12 aufnimmt. Dieser liegt an einer Schulter des Gehäusedeckels 10 an und preßt den Gehäusedeckel in Richtung auf die ebene Abschlußfläche 55 des Gehäusegrundkörpers. Die Anschlagfläche des Flansches 12 weist Gewindebohrungen 13 zur Aufnahme von Stiftschrauben auf, mit deren Hilfe der Gehäusedeckel 10 in Axialrichtung gegen die ebene Abschlußfläche 55 des Gehäusegrundkörpers 1 gepreßt werden kann, ohne daß beim Anziehen des Überwurfflanschringes 12 ein Dremoment auf den Deckel ausgeübt und etwa durch Drehung des Deckels ein Dichtring beschädigt werden könnte. Der Gehäusedeckel 10 weist an seiner dem Gehäusegrundkörper 1 zugewandten Seite eine flache zylindrische Ausnehmung auf, so daß zusammen mit der Abschlußwand 55 des Gehäusegrundkörpers ein flacher zylindrischer Raum (Niederdruckraum) gebildet wird. Randseitig ist der Niederdruckraum durch eine umlaufende C-Ring-Dichtung 11 begrenzt. Über dem C-Ring liegt eine Membran 4, gegen die sich der Betätigungsstößel 40 des Regelschiebers 3 abstützt.

Im zentralen Teil des Deckels 10 befindet sich eine Längsbohrung, in der eine Druckfeder 17 angeordnet ist. Die Druckfeder 17 stützt sich an einem Federteller 18 ab, der mittels einer Gewindespindel 41 durch Drehen an einem Handrad 42 axial verschiebbar ist. Das andere Ende der Druckfeder 17 ist von einer zylinderförmigen, an einem Ende offenen Dose 15 umgeben, die in Grenzen axial verschiebbar ist und auf der Membran 4 lastet. Die Dose 15 weist Ausklinkungen 16 auf, die in eine umlaufende Nut der sie umgebenden Wandung eingreifen, so daß die Axialbewegung in Richtung auf die Membran 4 hin begrenzt ist. Die Dose 15 wird durch den Ring 16 mechanisch in axialer Regelbewegung begrenzt. Der Ring 16 dient gleichzeitig oder zusätzlich durch ein weiteres Teil als Dämpfungselement.

Der Druckminderer gemäß Figur 1 arbeitet wie folgt. Hochdruckgas strömt über den Anschlußstutzen 23 und die Bohrung 37 in die den Regelschieber 3 enthaltende zentrale Axialbohrung, von dort - angenommen bei geöffnetem Regelschieber - über die Bohrung des Ventilsitzes 2 in den die Membran 4 enthaltenden Niederdruckraum und von dort zum Anschlußstutzen 24. Wenn der Druck am Ausgangsstutzen 24 über einen gewissen Wert ansteigt, steigt auch der Druck in dem die Membran 4 enthaltenden Raum an, bis schließlich die Membran 4 gegen die Kraft der Druckfeder 17 angehoben wird. Infolge der auf den Regelschieber 3 ausgeübten Magnetkraft folgt der Regelschieber dieser Bewegung bis er mit seiner Anschlagschulter den Ventilsitz 2 erreicht und die Zufuhr von weiterem Gas unterbindet. Somit wird das Ansteigen im ausgangsseitigen Gasdruck über einen gewissen Wert verhindert. Wenn der ausgangsseitige Gasdruck abfällt, beispielsweise weil Gas durch einen Verbraucher entnommen wird, senkt sich die Membran in Richtung auf den Betätigungsstößel 40 und hebt den Regelschieber 3 von dem Ventilsitz 2 ab, so daß weiteres Hochdruckgas nachströmen kann. Die gleiche Wirkung tritt ein, wenn durch Drehen an dem Handrad 41 die auf die Membran 4 ausgeübte Kraft der Druckfeder 17 verringert wird. Durch die Einstellung der auf die Membran 4 ausgeübten Federkraft kann somit der Sollwert des Ausgangsdruckes vorgegeben werden. Der Eingangs- und der Ausgangsdruck werden jeweils durch die Drucksensoren 33 und 34 erfaßt und angezeigt.

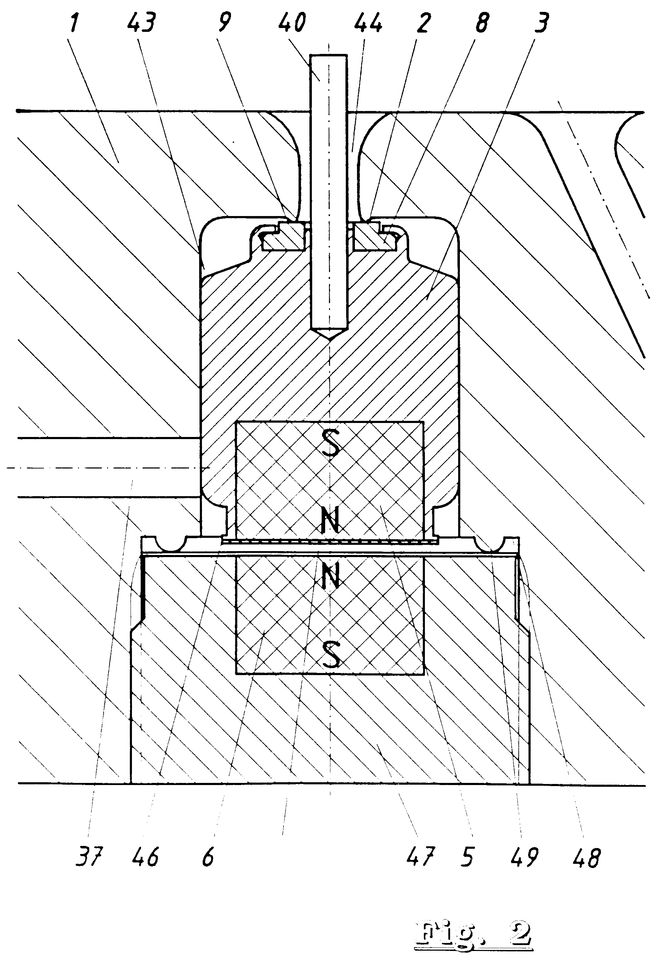

In Figur 2 ist ein Ausschnitt aus dem Gehäusegrundkörper 1 zu erkennen, der eine Axialbohrung 43 aufweist, die den Regelschieber 3 enthält. Der Regelschieber ist - was in der Zeichnung nicht zu erkennen ist - im Querschnitt sechseckig, so daß zwischen ihm und der Wandung der runden Bohrung 43 an den abgeflachten Seiten des Sechsecks ausreichend Platz für die Gasströmung verbleibt. In Figur 2 ist des weiteren der Ventilsitz 2 zu erkennen, der durch eine Bohrung 44 mit verringertem Durchmesser gebildet ist, deren Kanten abgerundet sind. Die Kanten der Bohrung 44 gehen in einen Dichtwulst 9 über. Der Regelschieber 3 weist an einem Ende einen in eine Bohrung eingelassenen Betätigungsstößel 40 auf, der die Ventilbohrung 44 durchragt. Der Betätigungsstößel ist von einer ringförmigen Ausnehmung umgeben, in die ein Kunststoffring 8 eingelassen ist. Die Wandung der Ausnehmung weist eine Umbördelung 45 auf, mittels der der Kunststoffring 8 in dem Regelschieber gehalten wird. An dem den Betätigungsstößel aufweisenden gegenüberliegenden Ende befindet sich ebenfalls eine zylindrische Ausnehmung, in die ein Permanentmagnet 5 eingelassen ist. Die den Permanentmagnet 5 enthaltende Ausnehmung ist durch eine Edelstahlmembran abgeschlossen, die durch eine umlaufende Schweißung 46 dicht gehalten wird. Die Bohrung 43 ist an der dem Ventilsitz 2 gegenüberliegenden Seite durch einen Gewindestopfen 47 abgeschlossen, der sich an einer Schulter 48 abstützt. Die Schulter 48 ist mit einem Dichtwulst 49 versehen, der sich beim Eindrehen des Gewindestopfens 47 plattdrückt und einen dichten spaltfreien Abschluß gewährleistet. Der Gewindestopfen 47 weist an seiner dem Regelschieber 3 zugewandten Seite eine zylindrische Ausnehmung auf, die einen Permanentmagneten 6 enthält. Dieser liegt dem Permanentmagnet 5 des Regelschiebers 3 gegenüber. Die Polarität ist so gewählt, daß die beiden Magnete sich abstoßen und der Regelschieber 3 in Richtung auf den Ventilsitz 2 gepreßt wird.

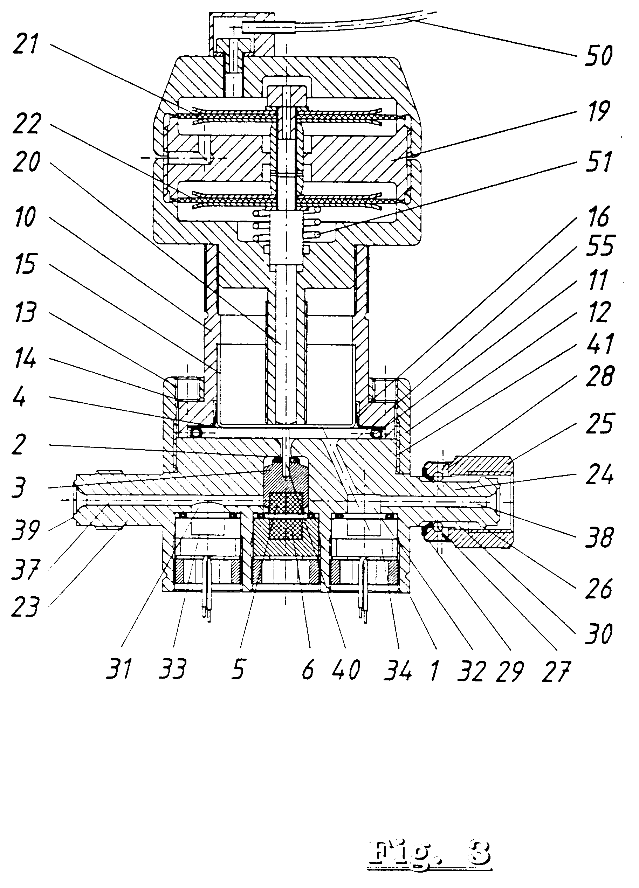

Der Druckminderer in Figur 3 ist soweit der Gehäusegrundkörper 1, dessen Anschlußstutzen 23, 24, dessen Drucksensoren 33, 34, dessen Regelschieber 3 und die Anordnung der Permanentmagnete 5 und 6 betroffen sind, identisch zu dem Druckminderer der Figur 1, so daß zur Vermeidung von Wiederholungen auf die Beschreibung der Figuren 1 und 2 verwiesen wird.

Anders als beim Druckminderer der Figur 1 wird bei dem Druckminderer gemäß Figur 3 die auf die Membran 4 ausgeübte Kraft, durch die der Ausgangssollwert des Druckes vorgegeben wird, durch einen Pneumatikzylinder 19 erzeugt. Der Pneumatikzylinder 19 weist eine Kolbenstange 20 auf, die - unter Zwischenschaltung einer Dose 15 - gegen die Membran 4 drückt. Zur Betätigung der Kolbenstange 20 dienen zwei Arbeitsmembranen 21 und 22, die auf ihrer oberen Seite (bezogen auf die Darstellung der Figur 3) mit Druckluft beaufschlagt werden können. Die Druckluft tritt über die Leitung 50 an die eine Seite der Arbeitsmembran 21 und strömt von dort weiter über die zentrale Bohrung in der Kolbenstange 20 sowie eine Radialbohrung in der Kolbenstange 20 zur Oberseite der zweiten Membran 22. Durch die Kraft der Druckluft wird die Kolbenstange 20 in Richtung auf die Membran 4 des Druckminderers bewegt. Bei Zurücknahme des Arbeitsdrucks in der Leitung 50 sorgt eine Feder 51 für das Zurückziehen des Kolbens 20. Durch die Wahl des Drucks der über die Leitung 50 zugeführten Preßluft kann somit der Ausgangsdruck am Anschlußstutzen 24 gesteuert werden. Ein Druckminderer der in Figur 3 gezeigten Art kann somit ferngesteuert werden, eine Betätigung eines Handrads ist nicht erforderlich.

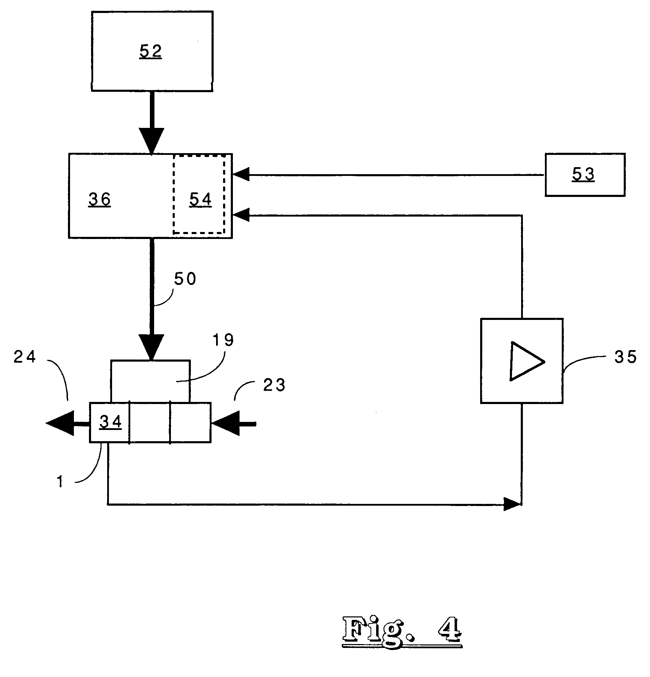

Insbesondere eignet sich der Druckminderer nach Figur 3 für eine Anordnung, wie sie in Figur 4 gezeigt ist. In Figur 4 ist lediglich schematisch der Druckminderer mit seinem Gehäusegrundkörper 1 und dem Pneumatikventil 19 sowie seinen beiden Anschlußstutzen 23 und 24 dargestellt. Das elektrische Ausgangssignal des Drucksensors 34 im Niederdruckraum wird über einen Verstärker 35 einer Magnetventileinrichtung 36 zugeleitet. Die Magnetventileinrichtung 36 steuert die Zufuhr von Druckluft aus einem Druckluftvorrat 52 zu dem Pneumatikzylinder 19. Durch einen Sollwertgeber 53 wird ein Drucksollwert vorgegeben. Das von dem Sollwertgeber 53 kommende elektrische Signal (Sollwert) und das von dem Drucksensor 34 kommende (verstärkte) Signal (Istwert) werden in einem Vergleicher 54 , der Teil der Magnetventileinrichtung 36 ist, verglichen. Der in Figur 4 dargestellte Druckminderer arbeitet wie folgt:

Wenn das von dem Drucksensor 34 abgegriffene und über den Verstärker 35 verstärkte elektrische Signal unter einen durch den Sollwertgeber 53 vorgegebenen Sollwert fällt, was bedeutet, daß der Druck am Ausgang 24 einen vorgegebenen Sollwert unterschritten hat, wird die Magnetventileinrichtung 36 so angesteuert, daß die Druckluftzufuhr von dem Druckluftvorrat 52 zu dem Pneumatikzylinder 19 geöffnet wird. Dadurch werden die Arbeitsmembranen des Pneumatikzylinders 19 mit zusätzlicher Druckluft beaufschlagt, so daß sich die Kolbenstange 20 (Figur 3) in Richtung auf die Membran des Druckminderers bewegt, und über den Betätigungsstößel 40 den Regelschieber 3 aus seinem Ventilsitz 2 entfernt, so daß zusätzliches Hochdruckgas von dem Anschlußstutzen 23 über das Regelventil zum Ausgangsstutzen 24 geleitet werden kann, um dort den Druck zu erhöhen und der festgestellten Druckverringerung entgegenzuwirken. Mit dem Druckminderer gemäß Figur 4 ist eine Einrichtung geschaffen, die eine äußerst präzise Druckregelung von Reinstgasen ermöglicht. Bei Druckminderern nach dem Stand der Technik ist insbesondere störend, daß der Ausgangsdruck (Hinterdruck) in der Weise vom Eingangsdruck (Vordruck) abhängt, daß ein fallender Vordruck zu einem Steigen des Hinterdruckes führt. Mit dem erfindungsgemäßen Druckminderer ist daher eine weitgehende Unabhängigkeit des Hinterdruckes vom Vordruck erreicht, d.h., es kann ein konstanter Hinterdruck erzielt werden, der durch Änderungen des Vordruckes weitgehend unbeeinflußbar ist.

**Patentansprüche**

1. Druckminderer für Gase höchster Reinheit mit einem einen Hochdruckeinlaß und einen Niederdruckauslaß aufweisenden Gehäusegrundkörper (1), in dem ein Ventil, bestehend aus einem Ventilsitz (2) und einem in Richtung auf den Ventilsitz vorgespannten Regelschieber (3) angeordnet ist, welches Ventil den Innenraum des Gehäusegrundkörpers in einen Niederdruckraum und einen Hochdruckraum unterteilt, und mit einer im Niederdruckraum angeordneten Membran (4), an der sich der Regelschieber (3) abstützt und die von ihrer dem Regelschieber (3) abgewandten Seite her mit einer einstellbaren Kraft belastbar ist, **dadurch gekennzeichnet**, daß der Regelschieber (3) einen ersten Permanentmagneten (5) enthält, der gegenüber einem mit dem Gehäusegrundkörper (1) verbundenen zweiten Permanentmagneten (6) angeordnet ist, wobei die Polarität der beiden Permanentmagnete (5, 6) so gewählt ist, daß der Regelschieber (3) durch die Magnetkraft der beiden Permanentmagnete (5, 6) in Richtung auf den Ventilsitz (2) vorgespannt ist.

2. Druckminderer nach Anspruch 1, dadurch gekennzeichnet, daß der erste Permanentmagnet (5) in dem Regelschieber (3) an seiner dem Ventilsitz (2) abgewandten Seite angeordnet ist.

3. Druckminderer nach Anspruch 1 oder 2, dadurch gekennzeichnet, daß der erste Permanentmagnet (5) in dem Regelschieber (3) gekapselt ist.

4. Druckminderer nach Anspruch 3, dadurch gekennzeichnet, daß der Regelschieber (3) eine den ersten Permanentmagneten (5) aufnehmende Vertiefung aufweist, die durch eine Edelstahlmembran dicht abgeschlossen ist.

5. Druckminderer nach einem der Ansprüche 1 bis 4, dadurch gekennzeichnet, daß der zweite Permanentmagnet (6) gekapselt ist.

6. Druckminderer nach einem der Ansprüche 1 bis 5, dadurch gekennzeichnet, daß der Regelschieber (3) an seiner zur Anlage an den Ventilsitz (2) bestimmten Seite einen umbördelten Kunststoffring (8) aufweist.

7. Druckminderer nach Anspruch 6, dadurch gekennzeichnet, daß der Ventilsitz (2) aus einer Bohrung (44) im Gehäusegrundkörper (1) besteht, gegen deren Rand der Kunststoffring (8) anstellbar ist.

8. Druckminderer nach Anspruch 7, dadurch gekennzeichnet, daß der Ventilsitz (2) einen rings um die Bohrung umlaufenden Dichtwulst (9) aufweist, gegen den der Kunststoffring (8) anstellbar ist.

9. Druckminderer nach einem der Ansprüche 1 bis 8, dadurch gekennzeichnet, daß der die Membran (4) enthaltende Niederdruckraum die Form eines flachen Zylinders oder Prismas aufweist und auf einer Seite durch eine durchgehend ebene Abschlußfläche (55) des Gehäusegrundkörpers (1) und auf der gegenüberliegenden Seite durch die in eine Vertiefung eines Gehäusedeckels (10) eingelassene Membran (4) begrenzt wird, wobei sich der Gehäusedeckel (10) randseitig auf der ebenen Abschlußfläche (55) des Gehäusegrundkörpers (1) abstützt.

10. Druckminderer nach Anspruch 9, dadurch gekennzeichnet, daß die Membran (4) randseitig gegen den Gehäusegrundkörper (1) durch einen C-Ring (11) abgedichtet ist.

11. Druckminderer nach einem der Ansprüche 1 bis 10, dadurch gekennzeichnet, daß der Gehäusedeckel (10) auf dem Gehäusegrundkörper (1) mittels eines Überwurfflanschrings (12) befestigbar ist, welcher Überwurfflanschring (12) axiale Gewindebohrungen (13) für Spannschrauben enthält, die sich an einer umlaufenden Schulter (14) des Gehäusedeckels (10) abstützen.

12. Druckminderer nach einem der Ansprüche 1 bis 11, dadurch gekennzeichnet, daß in dem Gehäusedeckel (10) ein Stellorgan angeordnet ist, mittels dessen auf die Membran (4) eine einstellbare Kraft ausübbar ist, und daß das Stellorgan durch eine in dem Gehäusedeckel (10) axial verschieblich geführte Dose (15) abgeschlossen ist.

13. Druckminderer nach Anspruch 12, dadurch gekennzeichnet, daß die Dose (15) Ausklinkungen (16) aufweist, die sich in der der Membran (4) naheliegenden Endstellung der Dose (15) an dem Gehäusedeckel (10) abstützen.

14. Druckminderer nach Anspruch 12 oder 13, dadurch gekennzeichnet, daß das Stellorgan eine Druckfeder (17) ist, die sich einerseits am Innenboden der Dose (15) und andererseits an einem axial verstellbaren Federteller (18) abstützt.

15. Druckminderer nach Anspruch 12 oder 13, dadurch gekennzeichnet, daß das Stellorgan ein Pneumatikzylinder (19) ist, dessen Kolbenstange (20) sich am Boden der Dose (15) abstützt.

16. Druckminderer nach Anspruch 15, dadurch gekennzeichnet, daß der Pneumatikzylinder (19) mindestens zwei Arbeitsmembranen (21, 22) oder Arbeitskolben aufweist, die parallel mit Arbeitsfluid beaufschlagbar sind.

17. Druckminderer nach einem der Ansprüche 1 bis 16, dadurch gekennzeichnet, daß er mit dem Gehäusegrundkörper einstückige Anschlußstutzen (23, 24) aufweist.

18. Druckminderer nach Anspruch 17, dadurch gekennzeichnet, daß mindestens ein Anschlußstutzen (24) eine Überwurfmutter (25) trägt.

19. Druckminderer nach Anspruch 18, dadurch gekennzeichnet, daß der die Überwurfmutter (25) tragende Anschlußstutzen (24) eine Anschlagschulter (26) aufweist, deren Durchmesser kleiner ist als die kleinste lichte Weite der Überwurfmutter (25) und daß die Überwurfmutter (25) innenseitig eine mit Kugeln (27) befüllbare, im Querschnitt etwa halbkreisförmige Ringnut aufweist, derart, daß die in die Ringnut eingeführten Kugeln (27) an der Anschlagschulter (26) anschlagen und die Überwurfmutter (25) axial festlegen.

20. Druckminderer nach Anspruch 19, dadurch gekennzeichnet, daß die Überwurfmutter (25) einen Radialkanal aufweist, der in die Ringnut mündet und der mit einem Schutzring (29) verschließbar ist.

21. Druckminderer nach Anspruch 19 oder 20, dadurch gekennzeichnet, daß der Anschlußstutzen (24) zwischen der Anschlagschulter (26) und dem Gehäusegrundkörper (1) eine sich in Axialrichtung des Anschlußstutzens erstreckende Ausnehmung (30) aufweist, die eine begrenzte Verschiebung der Überwurfmutter (25) in Axialrichtung ermöglicht.

22. Druckminderer nach einem der Ansprüche 1 bis 21, dadurch gekennzeichnet, daß in dem Gehäusegrundkörper (1) mindestens ein Kanal (31, 32) vorgesehen ist, der in den Niederdruckraum und/oder in den Hochdruckraum mündet, und daß in dem Kanal bzw. in den Kanälen (31, 32) elektrische Drucksensoren (33, 34) angeordnet sind.

23. Druckminderer nach Anspruch 22 und Anspruch 15, dadurch gekennzeichnet, daß der elektrische Ausgang des Drucksensors (34) in dem Niederdruckraum - gegebenenfalls über einen Verstärker (35) - mit einer Magnetventileinrichtung (36) verbunden ist, deren Fluideingang mit Druckluft beaufschlagt ist und deren Fluidausgang mit dem Eingang des Pneumatikzylinders (19) verbunden ist.

24. Druckminderer nach Anspruch 23, dadurch gekennzeichnet, daß die Magnetventileinrichtung (36) einen Vergleicher (54) enthält, dessen Vergleichseingänge mit einem Sollwertgeber (53) und dem Ausgang des Niederdrucksensors (34) verbunden sind.

Fig. 1

Fig. 2

Fig. 3

**Fig. 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-220599 (DRUVA ARMATUREN GMBH) <br> * das ganze Dokument * <br> --- | 1-5 | G05D16/06 |
| Y | DE-A-3338111 (BRAN & LUBBE GMBH) <br> * das ganze Dokument * <br> --- | 1-5 | |
| Y | EP-A-270284 (EIDSMORE) <br> * Seite 2, Spalte 1, Zeile 1 - Seite 3, Spalte 4, Zeile 54; Figuren 1-8 * <br> --- | 1-5 | |
| A | EP-A-183205 (INTEGRATE FLOW SYSTEMS INC.) <br> * Seite 1, Zeile 1 - Seite 5, Zeile 20; Figuren 1, 2 * <br> --- | 1-23 | |
| A | DE-A-3901398 (FESTO KG) <br> * Spalte 1, Zeile 1 - Spalte 2, Zeile 46; Figuren 1-5 * <br> --- | 1-23 | |
| A | GB-A-1444393 (BOC INTERNATIONAL LTD.) <br> * das ganze Dokument * <br> ----- | 1-5 | |

**RECHERCHIERTE SACHGEBIETE (Int. Cl.5 )**

G05D
F16K

Der vorliegende Recherchenbericht wurde für alle Patentansprüche erstellt

| Recherchenort | Abschlußdatum der Recherche | Prüfer |
|---|---|---|
| DEN HAAG | 16 JULI 1991 | SCHOBERT D.A.V. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument